(19) Europäisches Patentamt
European Patent Office
Office européen des brevets

(11) **EP 2 373 516 B1**

## (12) EUROPEAN PATENT SPECIFICATION

(45) Date of publication and mention
of the grant of the patent:
**30.09.2020 Bulletin 2020/40**

(51) Int Cl.:
***B60W 20/00*** (2016.01)        ***B60K 6/48*** (2007.10)
***B60L 50/16*** (2019.01)

(21) Application number: **08875962.6**

(22) Date of filing: **08.12.2008**

(86) International application number:
**PCT/IB2008/055671**

(87) International publication number:
**WO 2010/067147 (17.06.2010 Gazette 2010/24)**

(54) **METHOD FOR CONTROLLING OPERATION OF A HYBRID VEHICLE AND HYBRID VEHICLE ADAPTED TO SUCH A METHOD**

VERFAHREN ZUM BETRIEB EINES HYBRIDFAHRZEUGES UND HYBRIDFAHRZEUG MIT SOLCHEM VERFAHREN

PROCÉDÉ DE COMMANDE DU FONCTIONNEMENT D'UNE VÉHICULE HYBRIDE ET VÉHICULE HYBRIDE ADAPTÉ À UN TEL PROCÉDÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.10.2011 Bulletin 2011/41**

(73) Proprietor: **Volvo Lastvagnar AB
405 08 Göteborg (SE)**

(72) Inventors:
• **LE BRUSQ, Philippe
F-69003 Lyon (FR)**

• **MOTTIER, Michel Lou
F-69720 Saint Bonnet de Mure (FR)**
• **MILLET, Michael
F-38440 Moidieu-Detourbe (FR)**

(74) Representative: **Goreaud, Alexandra
Cabinet Germain & Maureau
12 rue Boileau
69006 Lyon (FR)**

(56) References cited:
**EP-A- 1 632 378          EP-B- 1 113 943
GB-A- 2 416 617          JP-A- 2006 290 182
US-A1- 2008 243 324**

## Description

TECHNICAL FIELD OF THE INVENTION

This invention concerns a method for controlling operation of a hybrid automotive vehicle equipped with at least an internal combustion engine and an electric machine, each adapted to deliver torque to a driveline of the vehicle. The invention also concerns a hybrid automotive vehicle adapted to perform such a method.

BACKGROUND OF THE INVENTION

In non-hybrid automotive vehicles, the driver is aware that the vehicle can move because he or she hears the internal combustion engine running. Moreover, some information may be displayed on the dashboard of the vehicle on the basis of the rotation speed of the engine. For instance, warning lights which are active when the user is about to start the engine, automatically switch off when the engine is running. This is interpreted by the driver as showing that the engine is running and the vehicle is ready to move.

On hybrid vehicles, such an approach cannot be valid since the vehicle may be ready to go whereas the internal combustion engine is shut down, if an electric motor is provided with electrical energy in a quantity sufficient to move the vehicle. In other words, the technique used so far for conventional vehicles is not adapted for hybrid vehicles.

This implies that a driver may not notice that the vehicle is ready to move and he may then press down the accelerator pedal which will initiate an unexpected forward or backward movement of the vehicle, potentially dangerous if the driver has actually no intention to move the vehicle.

Moreover, industrial vehicles, such as trucks, are often equipped with accessories belonging to sub-units provided by bodybuilders. These accessories can be, for example, an end-dump body or an electric tailgate. In addition, automotive vehicles are equipped with sub-systems which need energy when the vehicle is moving, such as a heating system in the driver's compartment, a heating seat, a heating mirror, lights, electric tailgate or a winch. In conventional vehicles, these sub-systems can be powered on the basis of the rotation speed of the engine. This is not appropriate with a hybrid vehicle, insofar as energy can be also available from another source, namely the electric machine working as a motor or the battery set associated to the electric machine.

GB2416017 discloses an idler pulley assembly for use in a belt drive system on an internal combustion engine and which comprises an idler pulley rotatably mounted on a spindle which in turn is fixedly mounted on a support capable of rotation about an axis off-set from the spindle axis. It also discloses a method of fitting a drive belt to a drive belt system including the idler pulley assembly. In said method, the drive belt is located around other pulleys, the support is moved to a first rotational position which minimises the distance between pulleys and enables the drive belt to be located on the idler pulley, the belt then being tensioned by rotation of the support.

JP2006290182 discloses an operation state display device for a hybrid vehicle that displays an operation state of a system component unit related to an operation state of the hybrid vehicle on a display, wherein the operation state of the system configuration unit is quantitatively displayed on the display.

SUMMARY OF THE INVENTION

This invention aims at proposing a new method for controlling operation of a hybrid automotive vehicle which enables a driver and/or subsystems and accessories to actually take into account the real status of the vehicle in order to determine what actions are to be taken.

To this end, the invention concerns a method for controlling operation of a hybrid automotive vehicle equipped with at least an internal combustion engine and an electric machine, each adapted to deliver torque to a driveline of the vehicle, as defined in the independent method claim 1. This method comprises at least the following steps:

a) determination of the ability of the engine to deliver torque to an output shaft and allotment of a value to a first parameter, on the basis of this determination

b) determination of the ability of the electric machine to deliver torque to its output shaft and allotment of a value to a second parameter, on the basis of this determination

d) computation of a value of a global parameter, on the basis of the respective values of the first and second parameters and

e) generation of an electric or electronic signal representative of the value of the global parameter;

wherein the global parameter can take a first value (0) and second value (1) corresponding respectively to:

- a first configuration of the driveline (6) where it cannot move the vehicle (T), and
- a second configuration of the driveline where it can move the vehicle, on the basis of an order received;

wherein said global parameter ($P_G$) takes its second value when either the engine (61) or the electric machine (63) is able to deliver torque to a respective output shaft (66, 67, 69), or when both the engine and the electric machine are able to deliver torque to some output shafts characterized in that the global parameter ($P_G$) can take a third value (0,5) corresponding to a third configuration of the powertrain (6) where it is switching from its first configuration to its second configuration.

Thanks to the invention, the electronic signal representative of the value of the global parameter can be used in the vehicle to inform either the driver or some sub-systems and accessories of the ability of the driveline to move the vehicle, irrespective of whether or not the internal combustion engine is actually running.

The global parameter takes its second value when either the engine or the electric machine is able to deliver torque to its respective output shaft, or when both the engine and the electric machine are able to deliver torque to their respective outputs shafts, whereas the gearbox is enabled to respond to a commutation order.

According to further aspects of the invention which are advantageous but not compulsory, such a method might incorporate one or several of the following features:

- Prior to step d), the method comprises a step c) of determination of the ability of the gearbox to transmit torque from its input shaft to its output shaft and allotment of a value to a third parameter, on the basis of this determination, whereas in step d), computation of the value of the global parameter is made also on the basis of the third parameter.
- A further step f) is used where the electronic signal is emitted on an onboard network of the vehicle. In such a case, at least one sub-system of the vehicle can check the value of the global parameter by accessing the electric signal on the network, prior to using power for fulfilling its function.
- Display of an information representative of the global parameter, on the basis of the electronic signal, takes place in another step g), after step e).
- Energizing of some auxiliary equipments is possible only if the value of the global parameter equals a predetermined value.
- The invention also concerns a hybrid automotive vehicle with which the above-mentioned method can be implemented, as defined by the independent device claim 7. More precisely, the invention concerns a hybrid automotive vehicle equipped with at least an internal combustion engine and an electric machine, each adapted to deliver torque to a driveline of the vehicle. This vehicle is characterized in that it includes means to implement the method according to the present invention.

Thanks to the invention, the electronic signal is representative of the possibility to move the vehicle, independently of the actual source of torque delivered to the driveline, be it the internal combustion engine or the electric machine, working as a motor.

Advantageously, the vehicle includes, within its driver's compartment, display means adapted to display an information representative of the above-mentioned electric or electronic signal.

BRIEF DESCRIPTION OF THE DRAWINGS

The invention will now be explained in correspondence with the annexed figures and as an illustrative example, without restricting the object of the invention. In the annexed figures:

- figure 1 is a schematic representation of a truck embodying the invention,
- figure 2 is a partial representation of a communication system belonging to the truck of figure 1, and
- figure 3 is a block diagram representing a method of the invention.

DETAILED DESCRIPTION OF SOME EMBODIMENTS

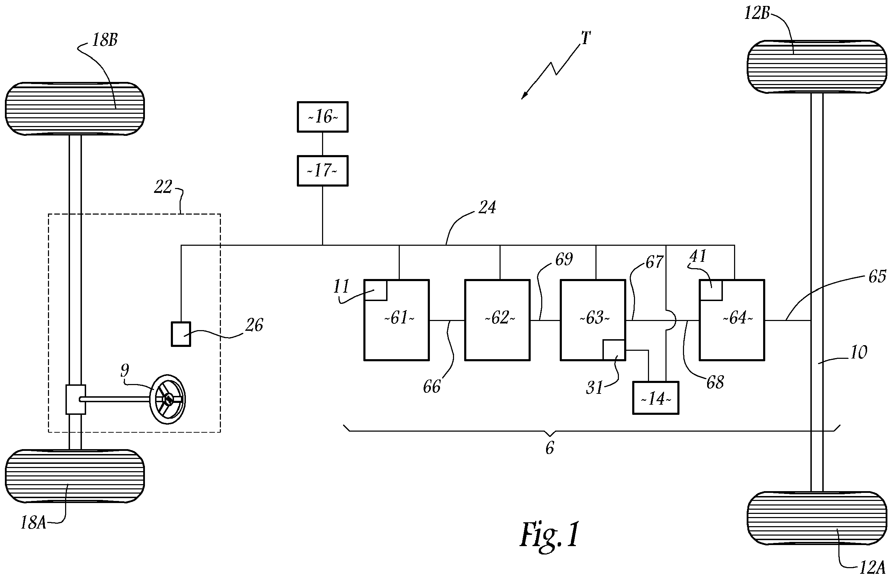

Truck T represented on figure 1 is provided with an internal combustion engine 61, a clutch 62, a reversible electric machine 63 and a gearbox 64. The output shaft 65 of gearbox 64 drives the rear axle 10 of truck T which drives two rear wheels 12A and 12B. Gearbox 64 can be for example an automated stepped gearbox or a continuously variable transmission (CVT).

66 denotes the crankshaft of the engine 61, that is its output shaft. Shaft 66 forms or drives the input shaft of clutch 62. 67 denotes the output shaft of electric machine 63 when it works as a motor and 68 denotes the input shaft of gearbox 64. Output shaft 67 and input shaft 68 are either fast in rotation with each other or made of one piece.

A transmission shaft 69 connects clutch 62 to electric machine 63.

The powertrain of truck T includes items 61 to 69 and the driveline 6 of truck T includes this powertrain and axle 10.

Electric machine 63 is connected to a battery set 14 and to an electronic control unit or ECU 16 which pilots systems and equipments of truck T, including items 61 to 64. Electric machine can work either as an electric generator to load battery set 14 or as an electric motor to deliver torque to the crankshaft 67 of engine 61.

Truck T is also provided with front wheels 18A and 18B controlled by a steering wheel 20 located in the driver's compartment 22.

A controller area network (CAN) 24 is provided on truck T and allows communications between different systems and equipments onboard truck T.

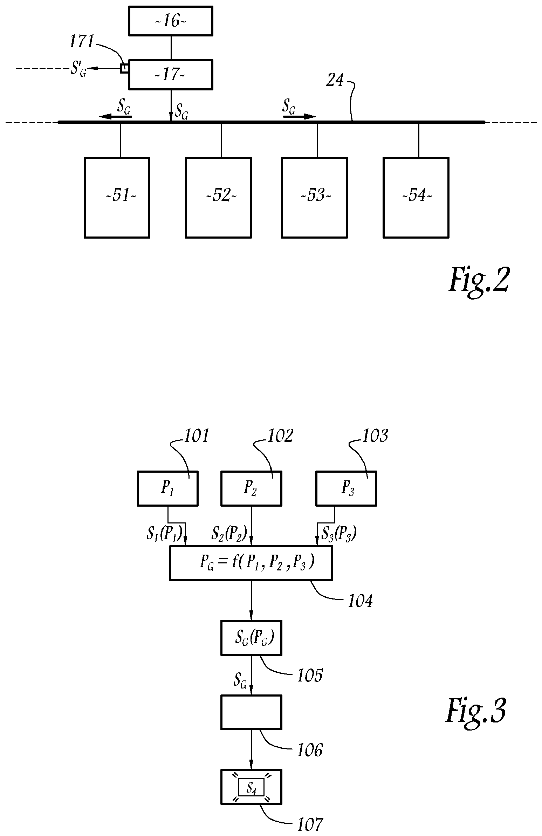

As shown on figure 2, an accessories subsystem 51 is connected to CAN 24. Subsystem 51 includes a power steering assembly with a pump, and the lighting system of the truck. A brake subsystem 52 is also connected to CAN 24, together with a cab subsystem 53 which includes, amongst others, heating means for the driver's compartment 22, for the driver's seat and for the external mirrors of truck T. A fourth subsystem 54 is connected to CAN 24 and is supposed to be connected to elements provided by a bodybuilder, such as driving means for a dump body, a winch or an electrical tailgate.

A first detection cell 11 is mounted on engine 61 and allows to detect if engine 61 is running or not. For instance, detection cell 11 can be a cell detecting the rotation speed of engine 61.

A first step 101 of the method of the invention can be implemented with detection cell 11. In this step, one determines if engine 61 is running or not, on the basis of its rotation speed. A first parameter $P_1$ is determined in the following manner: if the engine is stopped, parameter $P_1$ takes value 0 and if the engine is running, parameter $P_1$ takes value 1.

Alternatively, parameter $P_1$ can be determined by ECU 16 on the basis of several unitary signals representative of whether or not engine 61 is started and whether or not the clutch 62 is active to transmit a torque, whether or not its cooling sub-system works properly and whether or not its electronic drive unit works properly.

Irrespective of its actual computation method, parameter $P_1$ is representative of the ability of engine 61 to deliver a torque to its output shaft 66.

In a second step 102 of the method, one determines whether electric machine 63 can work as a motor to deliver torque to its output shaft 67. More precisely, a detection cell 31 is provided in electric machine 63 and detects the actual load of battery set 14 and the status of electric machine 63. On the basis of this detection, a parameter $P_2$ takes two values, namely 0 if this machine cannot provide torque to the shaft 67 and 1 if this machine can actually provide torque to the shaft 67. $P_2$ may depend on further conditions, such as whether the electric machine cooling system works properly, whether or not the hazardous voltage interlock system (HVIL) works properly, whether or not the battery works properly, etc... If truck T is provided with a tension converter (600V / 24V), then a further condition can be verified to allot value 1 to parameter $P_2$, that is the fact that this converter works properly. This verification is part of the determination of parameter $P_2$.

In a third step 103 of the method, one determines, with a cell 41, if gearbox 64 is enabled, that is if it can actually respond to a commutation order, i.e. an order to change the speed ratio or to switch from a neutral state where no torque is transmitted through the gearbox to a state where torque can be transmitted from the input shaft 68 to the output shaft 65 of the gearbox. If gearbox 64 is enabled, a third parameter $P_3$ takes value 1. If this is not the case, parameter $P_3$ takes value 0.

The order of steps 101, 102 and 103 is only indicative and these three steps can occur in any order, or at least partly simultaneously.

The respective values of parameters $P_1$, $P_2$ and $P_3$ are transmitted to ECU 16, via CAN 24 and a telecommunication electronic control unit 17, in the form of three electronic unitary signals $S_1$, $S_2$ and $S_3$.

A global parameter $P_G$ is computed in ECU 16, as a function of parameters $P_1$, $P_2$ and $P_3$. This global parameter is representative of the ability for powertrain 6 to move truck T. Such is the case when gearbox 64 is enabled and when either engine 61 or electric machine 63 is active or when both of these machines are active. The value of global parameter $P_G$ can therefore be equal to 0 when both engine 61 and electric motor 63 are stopped or not in a configuration to provide torque to their respective output shafts 66 and 67 or when gearbox 64 is not enabled. On the contrary, parameter $P_G$ takes value 1 if engine 61 is running and gearbox 64 is enabled and/or if engine 63 is active and gearbox 64 is enabled.

In other words, the value of parameter $P_G$ is a function f of the respective values of parameters $P_1$, $P_2$ and $P_3$, which can be written

$$P_G = f (P_1, P_2, P_3)$$

In a further step 105 of the method, the value of parameter $P_G$ is incorporated into an electronic signal $S_G$ which is generated by telecommunication ECU 17 and sent to CAN 24 in a further step 106. Signal $S_G$ is then available for subsystems 51 to 54 which can all determine if driveline 6 is in a configuration to move truck T or in a configuration where it cannot move truck T.

Signal $S_G$ can also be sent by a display 26 located in the driver's compartment 22 and providing the driver with an information with respect to the actual status of power train 6, on the basis of the actual value of $P_G$. If $P_G$ equals 0, display 26 shows that powertrain 6 is not active. If $P_G$ equals 1, display 26 shows that powertrain 6 is active. This takes place in a further step 107 of the method.

In other words, the driver can check on display 26 if driveline 6 is active to move truck T or not, without having to rely on the noise usually made by the internal combustion engine 61. This is appropriate insofar as power can also come from the electric motor 63 which is silent when active.

Alternatively or in addition, actuation of display 26 can be made directly by transmission ECU 17 which sends a dedicated signal $S'_G$ to display 26 via a dedicated output 171 and a non-represented network.

The method of the invention can be implemented as long as ECU 16 is under tension, so that signal $S_G$ is available for all subsystems 51 to 54 when any one of these systems is likely to request an information with respect to the status of powertrain 6. Therefore, subsystems 51 to 54 do not have to initiate a special proceeding to check the status of engine 61 and electric machine 63 prior to fulfilling their functions. Each subsystem 51 to 54 can check the value of $P_G$ on network 24 by accessing and reading signal $S_G$. The respective control units of subsystems 51 to 53 are set to allow these subsystems to fulfill their functions only if signal $S_G$ conveys value 1 of global parameter $P_G$, that in case powertrain 6 is active to move truck T.

Moreover, display of the information corresponding to parameter $P_G$ in the driver's compartment 20 avoids the driver to unduly try to re-start the engine 61, whereas power train 6 is already active.

According to an advantageous aspect of the invention, which is not compulsory, parameters $P_1$, $P_2$ and $P_3$ can take three values, namely the two values 0 and 1 mentioned here-above and a value corresponding to an intermediate situation, respectively when one of items 61, 63 and 64 is in the process of changing from an inactive state to an active state. This enables parameters $P_G$ to also take three values and signal $S_G$ to vary accordingly, so that an information can be shown on display 26 when one or several of the components of powertrain 6 are in the process of reaching an active state. Parameter $P_G$ takes its third value, which can be 0,5, when one of elements 61, 63 or 64 is switching from a non-active configuration to an active configuration, that is when driveline 6 is actually switching from a configuration where it cannot move truck T to a configuration where it can move truck T.

According to another approach, global parameter $P_G$ can take different values different from 0, depending on the active parts of powertrain 6. For instance, parameter $P_G$ can take value 1 if only engine 61 is active to deliver torque to crankshaft 67, value 2 if only electric motor 63 is active to deliver torque to crankshaft 67 and value 3 if both engine 61 and electric motor 63 are active. These values 1, 2 or 3 of parameter $P_G$ assume that gearbox 64 is enabled. These different values of parameter $P_G$ can be incorporated into signal $S_G$ and used by subsystems 51 to 54 to determine if they can fulfill their respective functions and display 26 to inform the driver, as mentioned here-above.

The invention is applicable irrespectively of the actual architecture of the driveline 6 of the truck T. In particular, the arrangement and order of items 61, 62, 63 and 64 can be modified. It can be applied to different hybrid electric vehicle architectures, especially to parallel and series/parallel "power split" architectures.

With the invention, it is not compulsory to take into account the status of gearbox 64. In other words, computation of global parameter $P_G$ can be based on first and second parameters $P_1$ and $P_2$ only and step 103 is optional. $P_G$ is then a function f' of parameters $P_1$ and $P_2$ which can be written:

$$P_G = f' (P_1, P_2)$$

The parameter $P_G$ can be used as follows. Depending on the values of parameter $P_G$ the vehicle can be operated in different modes. For exemple, when $P_G = 1$, the followings mode are available:

i) hybrid mode, that is when clutch 62 is active to transmit a torque, engine 61 is running, its cooling system works properly, machine 63 is active, its cooling system works properly, the Hazardous Voltage Interlock (HVIL) works properly, the electric machine works properly and the battery works properly ($P_1 = 1$, $P_2 = 1$)

ii) electric only mode, that is when no fuel is injected in engine 61 and when machine 63 is active, its cooling system works properly, the HVIL works properly, the electric machine works properly and the battery works properly ($P_1 = 0$, $P_2 = 1$)

iii) internal combustion only mode, that is when clutch 62 is active to transmit a torque, engine 61 is running, its cooling system works properly and machine 63 is not active ($P_1 = 1$, $P_2 = 0$)

iv) electric mode only with engine 61 idle, that is when clutch 62 does not transmit torque, engine 61 is running, its cooling system works properly, machine 63 is active, its cooling system works properly, the HVIL works properly, the electric machine works properly and the battery works properly ($P_1 = 0$, $P_2 = 1$)

v) charge at standstill mode, that is when clutch 62 is active to transmit a torque to an alternator, engine 61 is running, its cooling system works properly, machine 63 is active, its cooling system works properly, the HVIL works properly, the electric machine works properly and the battery works properly and the power is temporarily used to load battery set 14.

Alternatively, when $P_G = 0$, the following modes can be implemented:

- starting mode: engine 61 is being started and the propulsion mode is being initiated ($P_1 = 0$, $P_2 = 0$);
- switch-off mode when the truck is being switched off ($P_1 = 0$, $P_2 = 0$).

In this example, parameters $P_1$ may take into account the status of clutch 62, that is whether or not it is active to deliver torque to its output shaft 69. Therefore, parameter $P_1$ is representative of the ability of engine 61 to deliver torque to shaft 69.

The invention has been explained in reference to an embodiment where electronic signals $S_1$, $S_2$ $S_3$ and $S_G$ are used. The invention can also be implemented with electric signals, that is non-coded signals which have a voltage value directly depending on their logical value.

The invention is applicable with trucks, buses, cars and any other automotive hybrid vehicle.

**Claims**

1. A method for controlling operation of a hybrid automotive vehicle (T) equipped with at least an internal combustion engine (61) and an electric machine (63), each adapted to deliver torque to a driveline (6) of the vehicle, wherein said method comprises at least the following steps:

a) determination (101) of the ability of the engine (61) to deliver torque to an output shaft (66, 69) and allotment of a value (0,1) to a first parameter (P1) on the basis of this determination,

b) determination (102) of the ability of the electric machine (63) to deliver torque to its output shaft (67) and allotment of a value (0,1) to a second parameter (P2) on the basis of this determination,

d) computation (104) of a value (0, 1, 2, 3) of a global parameter (P_G), on the basis of the respective values of the first and second parameters (P1, P2), and

e) generation (105) of an electric or an electronic signal (89) representative of the value of the global parameter (P_G);

wherein the global parameter can take a first value (0) and second value (1) corresponding respectively to:

- a first configuration of the driveline (6) where it cannot move the vehicle (T), and
- a second configuration of the driveline where it can move the vehicle, on the basis of an order received;

wherein said global parameter (P_G) takes its second value when either the engine (61) or the electric machine (63) is able to deliver torque to a respective output shaft (66, 67, 69), or when both the engine and the electric machine are able to deliver torque to some output shafts **characterized in that** the global parameter (P_G) can take a third value (0,5) corresponding to a third configuration of the powertrain (6) where it is switching from its first configuration to its second configuration.

2. Method according to claim 1, wherein it comprises prior to step d), a step c) of determination (103) of the ability of the gearbox (64) to transmit torque from its input shaft (68) to its output shaft (65) and allotment of a value (0,1) to a third parameter (P3) on the basis of this determination, and wherein, in step d), the computation of the value of the global parameter (P_G) is made also on the basis of the third parameter.

3. Method according to one of claims 1 or 2, wherein it comprises a further step of:
f) emission (106) of the electric signal (S_G) on a onboard network (24) of the vehicle (T).

4. Method according to claim 3, wherein at least one subsystem (51, 54) of the vehicle (T) checks the value (0, 1, 2, 3) of said global parameter (P_G) by accessing said electric signal (S_G) on said network (24), prior to using power for fulfilling its function.

5. Method according to one of claims 1 to 4, wherein it comprises, after step e), a further step of:

a) display (107) of an information representative of the global parameter (P_G), on the basis of the electronic signal (S_G).

6. Method according to one of the previous claims, wherein energizing of some auxiliary equipments (51, 54) is possible only if the value (0, 1, 2, 3) of said global parameter (P_G) equals a predetermined value.

7. A hybrid automotive vehicle (T) equipped with at least an internal combustion engine (61) and an electric machine (63), each adapted to deliver torque to a driveline (6) of the vehicle, wherein said vehicle includes means (16, 17) to implement the method according to one of the previous claims.

8. Vehicle according to one of claim 7, wherein it includes, within its driver's compartment (22), display means (26) adapted to display an information representative of said electric or electronic signal (S_G).

**Patentansprüche**

1. Verfahren zur Steuerung des Betriebs eines Hybridkraftfahrzeugs (T), das mit mindestens einem Verbrennungsmotor (61) und einer Elektromaschine (63) ausgestattet ist, die jeweils dazu eingerichtet sind, ein Drehmoment an einen Antriebsstrang (6) des Fahrzeugs abzugeben, wobei das Verfahren mindestens die folgenden Schritte umfasst:

a) Bestimmung (101) der Fähigkeit des Motors (61), ein Drehmoment an eine Abtriebswelle (66, 69) abzugeben, und Zuteilung eines Werts (0, 1) zu einem ersten Parameter (P1) auf der Basis dieser Bestimmung,

b) Bestimmung (102) der Fähigkeit der Elektromaschine (63), ein Drehmoment an ihre Abtriebswelle (67) abzugeben, und Zuteilung eines Werts (0, 1) zu einem zweiten Parameter (P2) auf der Basis dieser Bestimmung,

d) Berechnung (104) eines Werts (0, 1, 2, 3) eines globalen Parameters (P_G) auf der Basis der jeweiligen Werte des ersten und des zweiten Parameters (P1, P2) und

e) Erzeugung (105) eines elektrischen oder elektronischen Signals (89), das den Wert des globalen Parameters (P_G) repräsentiert;

wobei der globale Parameter einen ersten Wert (0) und einen zweiten Wert (1) annehmen kann, entsprechend jeweils:

- einer ersten Konfiguration des Antriebsstrangs (6), in der sie das Fahrzeug (T) nicht bewegen kann, und

- einer zweiten Konfiguration des Antriebsstrangs, in der sie das Fahrzeug bewegen kann, auf der Basis eines empfangenen Befehls;

wobei der globale Parameter ($P_G$) seinen zweiten Wert annimmt, wenn entweder der Motor (61) oder die Elektromaschine (63) dazu fähig ist, ein Drehmoment an eine jeweilige Abtriebswelle (66, 67, 69) abzugeben, oder wenn sowohl der Motor als auch die Elektromaschine dazu fähig sind, ein Drehmoment an einige Abtriebswellen abzugeben, **dadurch gekennzeichnet, dass** der globale Parameter ($P_G$) einen dritten Wert (0,5) annehmen kann, entsprechend einer dritten Konfiguration des Antriebsstrangs (6), in der er von seiner ersten Konfiguration in seine zweite Konfiguration schaltet.

2. Verfahren nach Anspruch 1, wobei es vor Schritt d) einen Schritt c) einer Bestimmung (103) der Fähigkeit des Getriebes (64), ein Drehmoment von seiner Antriebswelle (68) an seine Abtriebswelle (65) zu übertragen, und einer Zuteilung eines Werts (0, 1) zu einem dritten Parameter (P3) auf der Basis dieser Bestimmung umfasst und wobei in Schritt d) die Berechnung des Werts des globalen Parameters ($P_G$) auch auf der Basis des dritten Parameters vorgenommen wird.

3. Verfahren nach einem der Ansprüche 1 oder 2, wobei es einen weiteren Schritt umfasst:
f) Aussendung (106) des elektrischen Signals ($S_G$) auf einem Bordnetzwerk (24) des Fahrzeugs (T).

4. Verfahren nach Anspruch 3, wobei mindestens ein Untersystem (51, 54) des Fahrzeugs (T) den Wert (0, 1, 2, 3) des globalen Parameters ($P_G$) durch Zugreifen auf das elektrische Signal ($S_G$) auf dem Netzwerk (24) vor Verwenden von Leistung zur Erfüllung seiner Funktion prüft.

5. Verfahren nach einem der Ansprüche 1 bis 4, wobei es nach Schritt e) einen weiteren Schritt umfasst:

a) Anzeige (107) einer Information, die den globalen Parameter ($P_G$) repräsentiert, auf der Basis des elektronischen Signals ($S_G$).

6. Verfahren nach einem der vorhergehenden Ansprüche, wobei ein Speisen von einigen Zusatzeinrichtungen (51, 54) nur möglich ist, wenn der Wert (0, 1, 2, 3) des globalen Parameters ($P_G$) einem vorherbestimmten Wert gleicht.

7. Hybridkraftfahrzeug (T), das mit mindestens einem Verbrennungsmotor (61) und einer Elektromaschine (63) ausgestattet ist, die jeweils dazu eingerichtet sind, ein Drehmoment an einen Antriebsstrang (6) des Fahrzeugs abzugeben, wobei das Fahrzeug Mittel (16, 17) zum Implementieren des Verfahrens nach einem der vorhergehenden Ansprüche beinhaltet.

8. Verfahren nach Anspruch 7, wobei es innerhalb seines Fahrerraums (22) ein Anzeigemittel (26) beinhaltet, das dazu eingerichtet ist, eine Information anzuzeigen, die das elektrische oder elektronische Signal ($S_G$) repräsentiert.

**Revendications**

1. Procédé de commande de fonctionnement d'un véhicule automobile hybride (T) équipé au moins d'un moteur à combustion interne (61) et d'une machine électrique (63), chacun(e) étant adapté(e) pour délivrer un couple à une chaîne cinématique (6) du véhicule, où ledit procédé comprend au moins les étapes suivantes consistant :

a) à déterminer (101) la capacité du moteur (61) à délivrer un couple à un arbre de sortie (66, 69) et à attribuer une valeur (0,1) à un premier paramètre (P1) sur la base de cette détermination,
b) à déterminer (102) la capacité de la machine électrique (63) à délivrer un couple à son arbre de sortie (67) et à attribuer une valeur (0,1) à un deuxième paramètre (P2) sur la base de cette détermination,
d) à calculer (104) une valeur (0, 1, 2, 3) d'un paramètre global ($P_G$), sur la base des valeurs respectives des premier et deuxième paramètres (P1, P2), et
e) à générer (105) un signal électrique ou électronique (89) représentant la valeur du paramètre global ($P_G$) ;

dans lequel le paramètre global peut prendre une première valeur (0) et une deuxième valeur (1) correspondant respectivement à :

- une première configuration de la chaîne cinématique (6) où elle ne peut pas déplacer le véhicule (T), et
- une deuxième configuration de la chaîne cinématique où elle peut déplacer le véhicule, sur la base d'une commande reçue ;

dans lequel ledit paramètre global ($P_G$) prend sa deuxième valeur lorsque soit le moteur (61) soit la machine électrique (63) est capable de délivrer un couple à un arbre de sortie respectif (66, 67, 69), ou lorsque le moteur et la machine électrique sont capables de délivrer un couple à certains arbres de sortie **caractérisé en ce que** le paramètre global ($P_G$) peut prendre une troisième valeur (0,5) correspondant à une troisième configuration du groupe motopropulseur (6) où il passe de sa première configuration à sa deuxième configuration.

2. Procédé selon la revendication 1, dans lequel il comprend préalablement à l'étape d), une étape c) de détermination (103) de la capacité de la boîte de vitesses (64) à transmettre un couple de son arbre d'entrée (68) à son arbre de sortie (65) et d'attribution d'une valeur (0,1) à un troisième paramètre (P3) sur la base de cette détermination, et où, dans l'étape d), le calcul de la valeur du paramètre global ($P_G$) se fait également sur la base du troisième paramètre.

3. Procédé selon l'une des revendications 1 ou 2, dans lequel il comprend une étape supplémentaire consistant :

   f) à émettre (106) le signal électrique ($S_G$) sur un réseau de bord (24) du véhicule (T).

4. Procédé selon la revendication 3, dans lequel au moins un sous-système (51, 54) du véhicule (T) vérifie la valeur (0, 1, 2, 3) dudit paramètre global ($P_G$) en accédant audit signal électrique ($S_G$) sur ledit réseau (24), avant d'utiliser l'énergie pour remplir sa fonction.

5. Procédé selon l'une des revendications 1 à 4, dans lequel il comprend, après l'étape e), une étape supplémentaire consistant :

   a) à afficher (107) des informations représentant le paramètre global ($P_G$), sur la base du signal électronique ($S_G$).

6. Procédé selon l'une des revendications précédentes, dans lequel la mise sous tension de certains équipements auxiliaires (51, 54) n'est possible que si la valeur (0, 1, 2, 3) dudit paramètre global ($P_G$) est égale à une valeur prédéterminée.

7. Véhicule automobile hybride (T) équipé au moins d'un moteur à combustion interne (61) et d'une machine électrique (63), chacun(e) étant adapté(e) pour délivrer un couple à une chaîne cinématique (6) du véhicule, où ledit véhicule comporte des moyens (16, 17) pour mettre en œuvre le procédé selon l'une des revendications précédentes.

8. Véhicule selon la revendication 7, **caractérisé en ce qu'**il comporte, dans son poste de conduite (22), un moyen d'affichage (26) adapté pour afficher des informations représentant ledit signal électrique ou électronique ($S_G$).

Fig.1

*Fig.2*

*Fig.3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2416017 A
- JP 2006290182 B